# EUROPEAN PATENT APPLICATION

(11) **EP 4 465 432 A2**
(43) Date of publication of application: **20.11.2024**
(21) Application number: 24151564.2
(22) Date of filing: 12.01.2024
(51) Int. Cl.: H01M 50/486, H01M 50/489, H01M 10/48, H01M 10/052, H01M 10/42

(54) **BATTERY CELL ENCAPSULATION ENABLING EARLY DETECTION OF BATTERY THERMAL RUNAWAY**

(30) Priority: 06.02.2023 US 202318165121
(71) Applicant: Honeywell International Inc., Charlotte, NC 28202 (US)
(72) Inventor: FOSTER, Phllip C., Charlotte, 28202 (US)
(74) Representative: Haseltine Lake Kempner LLP

(57) **Abstract**

A battery cell unit comprising a battery cell body, and outgassing material encapsulating the battery cell body, wherein (i) the outgassing material comprises a compound that emits one or more off-gasses at a range of off-gas temperatures, (ii) the range of off-gas temperatures is associated with a thermal runaway pending event, and (iii) the one or more off-gasses are detectable by a gas sensor.

## Description

### FIELD OF THE INVENTION

Various embodiments of the present disclosure relate battery cell encapsulation, and more particularly to treatment of polymer films that allow for early indication of thermal runaway.

### BACKGROUND

Thermal runaway of batteries, such as lithium ion batteries, is a well-documented problem. When a battery is subjected to conditions that can cause an irreversible exothermic chain reaction within the battery, fires or violent explosions can result from thermal runaway. Electric vehicle manufacturers utilize battery management systems to monitor electrical conditions in battery banks, but in many cases the monitoring does not provide sufficient notice prior to thermal runaway to give occupants sufficient time to react to the situation safely and appropriately. There is a need for a means to predict a thermal runaway event with as much predictive time as possible.

### BRIEF SUMMARY

Various embodiments described herein relate to articles of manufacture, apparatuses, and systems for providing early warning of thermal runaway in batteries.

In accordance with various embodiments of the present disclosure, a battery cell unit is provided. In some embodiments, the battery cell unit comprises a battery cell body, and outgassing material encapsulating the battery cell body, wherein (i) the outgassing material comprises a compound that emits one or more off-gasses at a range of off-gas temperatures, (ii) the range of off-gas temperatures is associated with a thermal runaway pending event, and (iii) the one or more off-gasses are detectable by a gas sensor.

In some embodiments, the gas sensor comprises at least one of: a metal oxide sensor, an electrochemical sensor, a total volatile organic compound sensor, or an aerosol sensor. In some embodiments, the outgassing material comprises a polymer film incorporated with one or more chemical components including a specific vapor pressure associated with the range of off-gas temperatures. In some embodiments, the outgassing material comprises a thermochromic additive. In some embodiments, the outgassing material comprises one or more polymers. In some embodiments, the outgassing material comprises one or more polyolefins including at least one of: polyethylene, polyvinyl chloride, polypropylene, ethylene-vinyl acetate, or polychlorotrifluoroethylene (PCTFE). In some embodiments, the range of off-gas temperatures is below a temperature associated with the thermal runaway event. In some embodiments, the range of off-gas temperatures is below a temperature associated with cell venting. In some embodiments, the range of off-gas temperatures comprises a range of 120°C-140°C (248°F - 284°F). In some embodiments, a chemical component is incorporated separately into the outgassing material modifying its outgassing properties comprising the range of off-gas temperatures.

According to another embodiment, a battery system is provided. In some embodiments, the battery system comprises a battery pack comprising one or more battery cells, the one or more battery cells comprising a battery cell body and outgassing material encapsulating the battery cell body, wherein (i) the outgassing material comprises a compound that emits one or more off-gasses at a range of off-gas temperatures, (ii) the range of off-gas temperatures is associated with a thermal runaway pending event, and (iii) the one or more off-gasses are detectable by a gas sensor, the gas sensor configured to detect the off-gas, and a battery management system coupled to the gas sensor, the battery management system configured to perform one or more actions based on a detection of the off-gas. In some embodiments, the gas sensor is further configured to transmit a signal to the battery management system, the signal comprising an indication that at least one of the one or more battery cells has reached the range of off-gas temperatures based on the detection of the off-gas. In some embodiments, the one or more actions comprise disabling utilization of the battery pack. In some embodiments, the one or more actions comprise generating a warning signal. In some embodiments, the gas sensor comprises at least one of: a metal oxide sensor, an electrochemical sensor, a total volatile organic compound sensor, or an aerosol sensor. In some embodiments, the outgassing material comprises a polymer film incorporated with one or more chemical components including a specific vapor pressure associated with the range of off-gas temperatures. In some embodiments, the outgassing material comprises one or more polymers. In some embodiments, the outgassing material comprises one or more polymers. In some embodiments, the range of off-gas temperatures is below a temperature associated with the thermal runaway event. In some embodiments, the range of off-gas temperatures is below a temperature associated with cell venting. In some embodiments, the range of off-gas temperatures comprises a range of 248°F - 266°F.

According to another embodiment, a method is provided. In some embodiments, the method comprises sampling, by a computing device, off-gas measurement data from a gas sensor, the off-gas measurement data associated with a battery package comprising one or more battery cells and outgassing material encapsulating the battery cell body, wherein (i) the outgassing material comprises a compound that emits one or more off-gasses at a range of off-gas temperatures, (ii) the range of off-gas temperatures is associated with a thermal runaway pending event, and (iii) the one or more off-gasses are detectable by the gas sensor. In some embodiments, the method further comprises determining, by the computing device, a temperature or a rate of temperature change of the one or more battery cells based on the off-gas measurement data, determining, by the computing device, a thermal runaway pending event based on the temperature or the rate of temperature change of the one or more battery cells, and performing, by the computing device, one or more actions based on the thermal runaway pending event.

### BRIEF DESCRIPTION OF THE DRAWINGS

Embodiments incorporating teachings of the present disclosure are shown and described with respect to the figures presented herein.
FIG. 1 illustrates an example thermal runaway temperature curve.
FIG. 2 illustrates an example battery cell unit in accordance with some embodiments discussed herein.
FIG. 3 illustrates an example battery system incorporating thermal runaway detection in accordance with various embodiments of the present disclosure.
FIG. 4 illustrates a flowchart of a method for monitoring for a thermal runaway pending event in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

There are many technical challenges and difficulties associated with thermal runaway detection for batteries. In particular, conventional methods for detecting thermal runaway, such as the use of temperature sensors to detect temperature changes from batteries resulting from a lead up to a thermal runaway event, are not designed to detect early stages of thermal runaway. The amount of time for which a gas sensor can predict thermal runaway events depends on a host of factors including specific abuse conditions (puncture vs. overcharge vs. overheating, for example), battery composition type, battery electrolyte system used, state of charge of the battery, location of the sensor relative to the defective battery, and response time of the sensor. The high number of variables introduces predictive time and performance variabilities and uncertainties which may result in an inconsistent warning time for occupants, and in some cases may not allow enough time to initiate measures needed to exit a vehicle. Thus, there is a need to overcome such challenges and difficulties in early-stage thermal runaway detection for batteries.

Additionally, there is no industry standard battery for which a standard sensor is designed for detecting thermal runaway within the emerging electric vehicle market. Furthermore, battery technology continues to rapidly evolve, where designing such a sensor to detect or predict out-of-control conditions for a current battery technology does not imply that it will function effectively for future battery designs. As such, unique sensor technology deployments for different battery types may be required as battery technologies mature, which would require expensive and time-consuming re-qualifications.

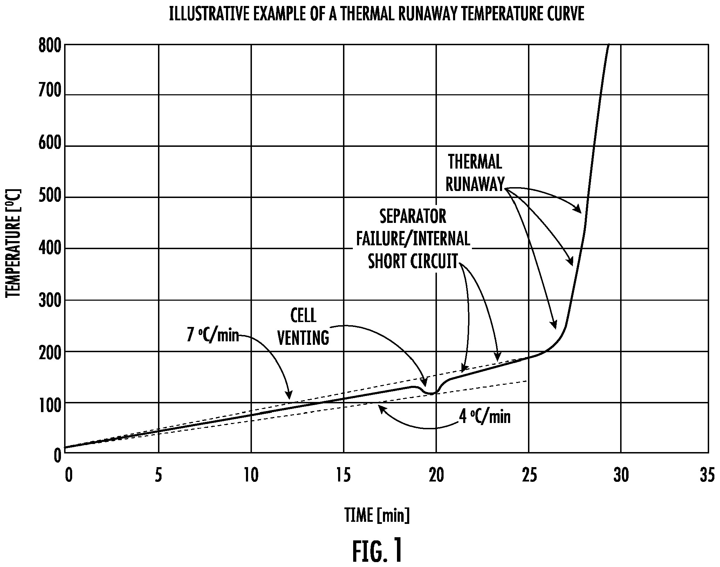

Lithium ion battery thermal runaway typically starts to occur at approximately 150°C (302°F), and cell venting typically starts to occur at approximately 134°C (272°F), as depicted in FIG. 1. Cell venting may refer to an emission of gasses from a battery cell resulting from a rupturing of the battery cell which may be caused by excessive pressure accumulated within the battery cell due to excessive operating temperature. A thermal runaway may refer to an uncontrolled exothermic chemical reaction which is manifested by a rapid rise in local temperature of a battery cell. Once thermal runaway occurs, a battery cell may self-destruct and establish the conditions for a vehicle fire. Only a few short minutes (e.g., less than five minutes) are available for occupants to exit their vehicle if a thermal runway condition is detected and alarmed at that time. However, if cell venting is detected and alarmed, additional time (e.g., eight minutes) may be afforded to exit the vehicle based on the temperature curve depicted in FIG. 1.

Cell venting may occur as a result of a rise in gas pressure in a battery cell. The rise in gas pressure may be a function of temperature such that cell venting detection can be considered a surrogate temperature indicator. Given that it may not be feasible to measure temperature directly on each battery cell, as some vehicles may contain thousands of cells, detecting cell venting (e.g., gas detection or aerosol detection) may provide a reliable alternative. In other words, the detection of cell venting may provide monitoring of both temperature as well as gas emission from battery cells. However, a disadvantage of detecting cell venting is that the chemical makeup of gasses vented from a cell may be dependent primarily on the electrolyte system used in the battery, and as such, the detection of cell venting via a gas sensor may be dependent upon the sensor technology and its sensitivity to specific gasses, as well as its cross-sensitivity to other gasses present in the ambient environment such as exhaust vapors or smog which can contain ozone, nitrogen oxides, carbon dioxide, carbon monoxide, and volatile organic compounds (VOC).

According to various embodiments of the present disclosure, rather than detecting cell venting of a battery, a system may be configured to detect off-gassing of a selected outgassing material, such as a polymer film used to encapsulate battery cells of a battery pack. The terms "off-gas," "off-gassing," and "outgassing" and/or similar words are used herein interchangeably to refer to the release of gas dissolved, trapped, absorbed, or incorporated in an outgassing material. Examples of polymer film usable to encapsulate battery cells according to various embodiments of the present disclosure include, but are not limited to, polymers including polyolefins, such as polyethylene, polyvinyl chloride, polypropylene, ethylene-vinyl acetate, PCTFE, and other types of polymers known to one of ordinary skill in the art. In some embodiments, the selected outgassing material may comprise one or more synthetic fabrics or elastomers.

A battery, as described herein, may refer to a battery pack comprising one or more battery cells of any type. Example battery cell types include, but are not limited to, lithium ion (e.g., lithium iron phosphate vs. lithium nickel cobalt aluminum oxide vs. lithium manganese oxide vs. lithium cobalt oxide), lead-acid, nickel-cadmium, nickel-metal hydride, to name a few. In some embodiments, the outgassing material may comprise a range of off-gas temperatures that is associated with a thermal runaway pending event, and a known specific material or compound capable of emitting off-gasses, emitting a certain threshold amount of off-gasses, or emitting off-gasses at a given rate of change, at the range of off-gas temperatures. The off-gasses may be detected by a gas sensor, such as a metal oxide sensor, an electrochemical sensor, a total volatile organic compound sensor, an aerosol sensor, or any other common electronic gas sensing equipment and/or method capable of detecting different types of gasses. As such, a precursor event (e.g., cell temperature below cell venting temperature) may be detected for any type of battery cell encapsulated with a selected outgassing material with known outgassing properties, without the need to determine battery electrolyte variables. Encapsuling a battery cell with a selected outgassing material may also provide the ability to customize a sensor for one or more specific off-gas components with known and consistent properties. Accordingly, by monitoring battery conditions using a known, controlled, and consistent outgassing material mounted on the battery itself, sensors can be used to accurately predict thermal runaway independent of battery technology or materials. Furthermore, the outgassing material may also be chosen or tailored for a given sensor technology.

According to various embodiments of the present disclosure, a gas sensor may be configured to detect a thermal runaway event based on one or more off-gasses emitted by a battery pack. In particular, the battery pack may comprise one or more battery cells encapsulated with an outgassing material such that, at a given temperature, the outgassing material may emit off-gasses detectable by the gas sensor. In some embodiments, the outgassing material comprises a polymer treated, imbued, coated, engineered, or otherwise incorporated with one or more chemical components including a specific vapor pressure, to emit off-gasses detectable by the gas sensor at a given temperature. For a lithium ion battery application, the given temperature may comprise a temperature sufficiently below a temperature when thermal runaway occurs (approximately 150°C/302°F), or below a temperature when cell venting starts to occur (approximately 134°C/272°F). As an example, the given temperature may be in the range of 120°C - 140°C (248°F - 284°F). However, other outgassing materials with various outgassing temperatures may also be selected, for example for various other battery types comprising different thermal runaway temperature characteristics or curves.

The disclosed outgassing material may be placed in intimate contact with the battery cell itself such that the temperature of the battery cell and the outgassing material will be in equilibrium, thus enabling the off-gassing of the outgassing material to represent the temperature of the battery cell. Properties of the outgassing material may correspond to temperature and outgassing conditions that would enable a gas sensor to detect a temperature threshold comprising an established temperature, e.g., below cell venting or thermal runaway temperatures, via the detection of outgassing. When the threshold temperature is exceeded, the outgassing material may off-gas at a predicable rate and temperature. In other words, the gas sensor may functionally act as a temperature sensor and indicate a temperature of the outgassing material as reaching a specific temperature to cause outgassing.

As an illustrative example, isoamyl acetate, an organic ester, has a boiling point temperature of approximately 142°C/288°F, which may be the temperature at which it achieves its highest off-gas rate and is in the approximate range of a battery first cell vent. In some embodiments, isoamyl acetate may be incorporated (e.g., seeded) in an outgassing material, such as a polymer, for encapsulating a battery cell. As such, the isoamyl acetate would not evaporate at ambient conditions, but can be detectable by certain sensors, such as VOC sensors when the polymer reaches temperatures that exceed the off-gas temperature threshold of the isoamyl acetate. The temperature at which the outgassing material outgasses the ester could be chosen so that it represents a temperature below thermal runaway temperature.

According to another aspect of the present disclosure, the disclosed outgassing material may also be incorporated with a color indicator upon reaching a threshold temperature to provide a visual indication of an affected battery cell. For example, a polymer selected as an outgassing material may be embedded with a thermochromic additive that causes the polymer to change color with exposure to a specific amount of heat, such as any temperature above a range of 130°C - 150°C (266°F - 302°F). The incorporation of a thermochromic element to an outgassing material may provide an indication of which of a plurality of battery cells (e.g., of a battery pack) have been exposed to excessive temperatures indicative of potential damage without the need to test each of the plurality of battery cells. Such a feature may be beneficial to technicians or manufacturers when servicing or repairing a battery pack. Methods for incorporating a temperature activated color indication in an outgassing material, such as a polymer, may be implemented through techniques known by one of ordinary skill in the art.

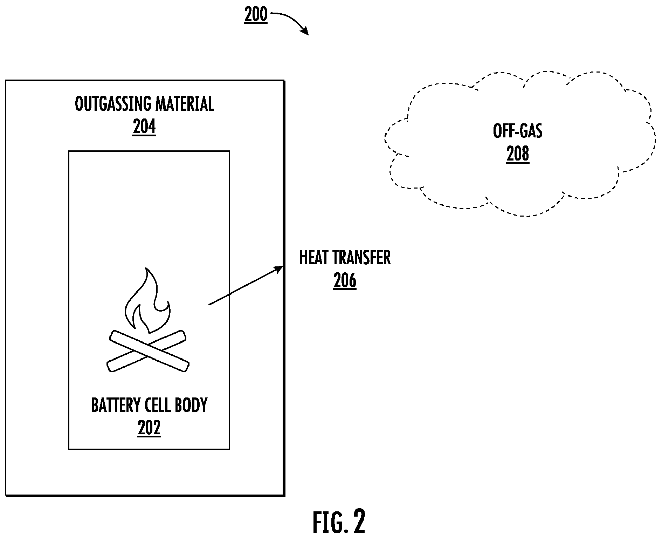

FIG. 2 presents an example battery cell unit 200 according to an embodiment of the present disclosure. The battery cell unit 200 comprises a battery cell body 202 and an outgassing material 204. Battery cell body 202 may comprise a container including a cathode, an anode, and electrolyte that are sealed within the container. In some embodiments, battery cell body 202 comprises a lithium battery cell. In other embodiments, the battery cell body 202 may comprise other types of battery cells known to one of ordinary skill in the art. For the purposes of illustration, battery cell body 202 is depicted as a rectangular shape, however, embodiments of the present disclosure may be implemented for any type of battery type or form factors, such as cylindrical, prismatic, or pouch. Also for the purposes of illustration, the entirety of battery cell body 202 is depicted as being enclosed in outgassing material 204. However, in other embodiments, battery cell body 202 may include exposed contact portions or connection leads breaching the outgassing material 204 for making electrical connections. For example, a battery cell body 202 may be wrapped with outgassing material 204 comprising a polymer sleeve to insulate the anode and prevent shorting to external conductive surfaces. The polymer may comprise a non-conductive heat shrink polymer that conforms with the body of a battery cell body 202. According to another embodiment, a battery cell body 202 may comprise a casing attached with the disclosed outgassing material in the form of a polymer film.

Outgassing material 204 may comprise chosen material properties corresponding to a specific temperature and/or outgassing condition that causes outgassing material 204 to generate off-gas 208. Off-gas 208 may comprise one or more gas constituents that evolve over a temperature range (e.g., a range of temperatures approximately between 120°C - 140°C (248°F - 284°F). The temperature threshold may comprise an established temperature of cell venting or prior to cell venting. The encapsulation of battery cell body 202 with outgassing material 204 may comprise outgassing material 204 to be in intimate contact with battery cell body 202. Heat transfer 206 causes the temperature of the battery cell body 202 and the outgassing material 204 to be in equilibrium, thus enabling off-gas 208 to represent the temperature of the battery cell body 202 upon reach the temperature threshold. For example, when the threshold temperature is exceeded, which matches the temperature at which the battery cell body 202 would first vent, the outgassing material 204 may generate off-gas 208 at a predicable rate and temperature. The presence of, a certain threshold amount (e.g., measured by concentration units, such as parts-per-million (ppm), and/or rate of change of off-gas) of, and/or a target rate of change of off-gas 208 may be used to enable a gas sensor to detect a temperature threshold indicative of cell venting or pre-cell venting.

In some embodiments, a gas sensor may be configured with a battery pack comprising one or more battery cells (e.g., battery cell body 202) encapsulated with the disclosed outgassing material (e.g., outgassing material 204) may be coupled to a battery management system. The gas sensor may transmit a signal to the battery management system to indicate that at least one battery cell of the battery pack has reached a given temperature preceding a thermal runaway condition based on outgassing from the outgassing material. Upon receiving such a signal, the battery management system may shut down or disable utilization of the battery pack, generate a warning signal, and transmit the warning signal to, for example in the case of an electric vehicle, an on-board computer indicative of a dangerous condition.

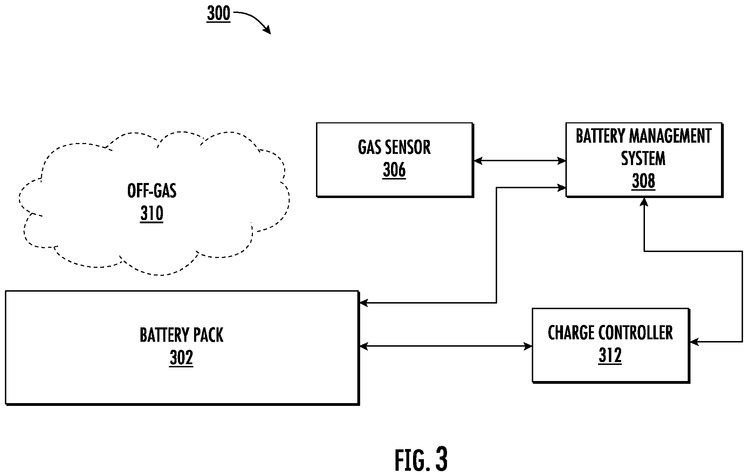

FIG. 3 presents an example battery system incorporating thermal runaway detection according to an embodiment of the present disclosure. Battery system 300 comprises battery pack 302, gas sensor 306, battery management system 308, and charge controller 312. Battery pack 302 may comprise a plurality of battery cells (e.g., battery cell body 202), where each cell may be encapsulated or wrapped in the outgassing material, as described according to various embodiments of the present disclosure. The plurality of battery cells may be configured in series, parallel, or a combination thereof to deliver a desired voltage, capacity, and/or power density. Each of one or more of the plurality of battery cells may comprise a threshold operating temperature prior to off-gassing, e.g., a range of temperatures approximately between 120°C - 140°C (248°F - 284°F).

If sufficient heat is conducted to the outgassing material from one or more battery cells of the battery pack 302 (e.g., a temperature that causes the outgassing material to reach boiling point), off-gas 310 may be released from battery pack 302. Off-gas 310 may comprise one or more gasses comprised in the outgassing material that are released as a result of heating to a critical temperature to cause the outgassing material to outgas. The gas sensor 306 may comprise a sensor capable of detecting the off-gassing emitted from the outgassing material regardless of the composition of off-gas 310. The gas sensor 306 may comprise a metal oxide sensor, an electrochemical sensor, a total volatile organic compound sensor, an aerosol sensor, or any other common electronic gas sensing equipment and/or method capable of detecting different types of gasses. Accordingly, system 300 may provide for early detection of thermal runaway by monitoring for off-gassing from outgassing material when one or more battery cells within battery pack 302 reach certain temperatures below cell venting and/or thermal runaway temperatures.

When battery pack 302 releases off-gas 310, gas sensor 306 may detect the presence of, a certain threshold amount of, and/or a target rate of change of off-gas 310 and transmit a data signal corresponding to or representative of an event, e.g., detection of off-gas 310, to battery management system 308. In one embodiment, the data signal comprises an indication that at least one of the one or more battery cells has reached the range of off-gas temperatures based on the detection of the off-gas. Battery management system 308 may perform appropriate functions to prevent further increase in temperature and damage to battery pack 302 based at least in part on the data signal from gas sensor 306. Battery management system 308 may comprise a computing device or processor configured to protect and ensure safe operation of battery pack 302. For example, battery management system 308 may monitor battery cells, provide protection to the battery cells, optimize performance of the battery cells, and report operational status of the battery cells to a device control unit.

According to one embodiment, battery management system 308 may monitor or receive data signals from gas sensor 306. As such, battery management system 308 may be configured to determine early-stage thermal runaway based at least in part on data signals representative of a detection of off-gas 310 by gas sensor 306. The battery management system 308 may monitor the status of battery pack 302 (e.g., including the detection of off-gas 310) and communicate with charge controller 312 to manage charging parameters of battery pack 302 based at least in part on the monitoring. Charge controller 312 may comprise a computing device or processor configured to provide charging of battery pack 302 at given currents and voltages. As disclosed herewith, a processor may comprise programmable logic devices, microprocessors, multi-core processors, coprocessing entities, application-specific instruction-set processors (ASIPs), microcontrollers, and/or controllers.

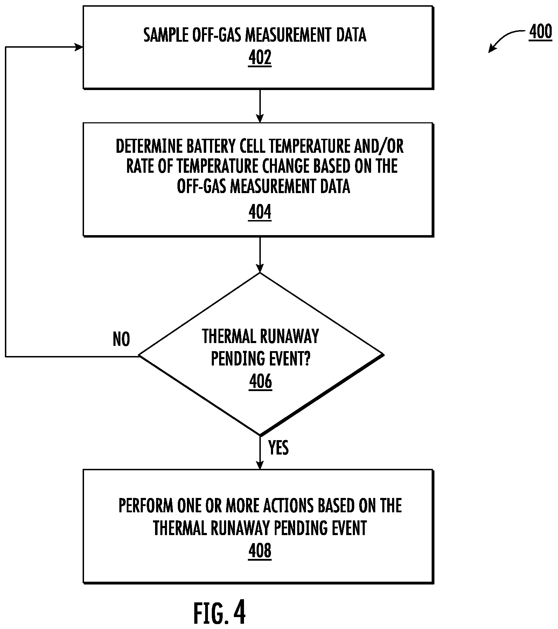

FIG. 4 presents an example flow diagram illustrating an exemplary method for monitoring for a thermal runaway pending event according to some embodiments of the present disclosure. In FIG. 4, the example method 400 may be executed by a computing device comprising memory and one or more processors. The computing device may be associated with a battery monitoring system, such as a battery management system. At step 402, the computing device samples off-gas measurement data associated with a battery package comprising one or more battery cells. The one or more battery cells may be encapsulated with outgassing material, as described according to various embodiments of the present disclosure.

The computing device may receive off-gas measurement data from one or more gas sensors. The computing device may be communicatively coupled to one or more gas sensors configured to detect presence, amount, and/or concentration of one or more gasses. In particular, the one or more gas sensors may be capable of performing off-gas measurement of one or more off-gasses associated with outgassing material encapsulating the at least one battery cell of the battery package. The off-gas measurement data may comprise one or more values based on the presence, amount, and/or concentration of one or more gasses detected by the one or more gas sensors. In some embodiments, off-gas measurement data sampled and received from the one or more gas sensors may comprise a quantitative value (e.g., ppm), a qualitative value (e.g., high, medium, low), or a Boolean/binary value (e.g., yes/no) indicative of an off-gas event.

In some embodiments, subsequent to step 402, the example method proceeds to step 404, where the computing device determines a temperature or a rate of temperature change of the one or more battery cells based on the off-gas measurement data. For example, the presence of, a certain threshold amount of, and/or a target rate of change of off-gas may be associated with a specific battery cell temperature or a range of battery temperatures (e.g., 120°C-140°C (248°F - 284°F)) based on specific outgassing properties of the outgassing material encapsulating the at least one battery cell of the battery package. Conversely, the absence of, a below threshold amount of, and/or a non-target rate of change of off-gas may be associated with temperatures below a specific battery cell temperature.

In some embodiments, subsequent to step 404, the example method proceeds to step 406, where the computing device determines whether there is a thermal runaway pending event based on the temperature of the one or more battery cells and/or the rate of temperature change of the one or more battery cells, as indicated by the off-gas measurement data provided by the one or more gas sensors. If the temperature of the one or more battery cells is not associated with a thermal runaway pending event, the example method proceeds back to step 402, wherein the computing device continues to sample off-gas measurement data associated with the battery package. Otherwise, if the temperature of the one or more battery cells is associated with a thermal runaway pending event (e.g., 120°C-140°C (248°F - 284°F)), the example method proceeds to step 408, wherein the computing device performs one or more actions based on the thermal runaway pending event. The one or more actions may comprise shutting down or disabling utilization of the battery pack, generating a warning signal, and transmitting the warning signal to, for example in the case of an electric vehicle, an on-board computer indicative of a dangerous condition.

### Conclusion

It should be understood that the examples and embodiments described herein are for illustrative purposes only and that various modifications or changes in light thereof will be suggested to persons skilled in the art and are to be included within the spirit and purview of this application.

Many modifications and other embodiments of the present disclosure set forth herein will come to mind to one skilled in the art to which the present disclosures pertain having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claim concepts. Although specific terms are employed herein, they are used in a generic and descriptive sense only and not for purposes of limitation.

## Claims

1. A battery cell unit comprising:
a battery cell body; and
outgassing material encapsulating the battery cell body, wherein (i) the outgassing material comprises a compound that emits one or more off-gasses at a range of off-gas temperatures, (ii) the range of off-gas temperatures is associated with a thermal runaway pending event, and (iii) the one or more off-gasses are detectable by a gas sensor.

2. The battery cell unit of claim 1, wherein the outgassing material comprises a polymer film incorporated with one or more chemical components including a specific vapor pressure associated with the range of off-gas temperatures.

3. The battery cell unit of claim 1, wherein the outgassing material comprises a thermochromic additive.

4. The battery cell unit of claim 1, wherein the outgassing material comprises one or more polyolefins including at least one of: polyethylene, polyvinyl chloride, polypropylene, ethylene-vinyl acetate, or polychlorotrifluoroethylene (PCTFE).

5. The battery cell unit of claim 1, wherein the range of off-gas temperatures is below a temperature associated with the thermal runaway event.

6. The battery cell unit of claim 1, wherein the range of off-gas temperatures is below a temperature associated with cell venting.

7. A battery system comprising:
a battery pack comprising one or more battery cells, the one or more battery cells comprising a battery cell body and outgassing material encapsulating the battery cell body, wherein (i) the outgassing material comprises a compound that emits one or more off-gasses at a range of off-gas temperatures, (ii) the range of off-gas temperatures is associated with a thermal runaway pending event, and (iii) the one or more off-gasses are detectable by a gas sensor;
the gas sensor configured to detect the off-gas; and
a battery management system coupled to the gas sensor, the battery management system configured to perform one or more actions based on a detection of the off-gas.

8. The battery system of claim 7, wherein the gas sensor is further configured to transmit a signal to the battery management system, the signal comprising an indication that at least one of the one or more battery cells has reached the range of off-gas temperatures based on the detection of the off-gas.

9. The battery system of claim 7, wherein the one or more actions comprise generating a warning signal.

10. The battery system of claim 7, wherein the outgassing material comprises a polymer film incorporated with one or more chemical components including a specific vapor pressure associated with the range of off-gas temperatures.

11. The battery system of claim 7, wherein the outgassing material comprises a thermochromic additive.

12. The battery system of claim 7, wherein the outgassing material comprises one or more polyolefins including at least one of: polyethylene, polyvinyl chloride, polypropylene, ethylene-vinyl acetate, or polychlorotrifluoroethylene (PCTFE).

13. The battery system of claim 7, wherein the range of off-gas temperatures is below a temperature associated with the thermal runaway event.

14. The battery system of claim 7, wherein the range of off-gas temperatures is below a temperature associated with battery cell venting.

15. A method comprising:
sampling, by a computing device, off-gas measurement data from a gas sensor, the off-gas measurement data associated with a battery package comprising one or more battery cells and outgassing material encapsulating the battery cell body, wherein (i) the outgassing material comprises a compound that emits one or more off-gasses at a range of off-gas temperatures, (ii) the range of off-gas temperatures is associated with a thermal runaway pending event, and (iii) the one or more off-gasses are detectable by the gas sensor;
determining, by the computing device, a temperature or a rate of temperature change of the one or more battery cells based on the off-gas measurement data;
determining, by the computing device, a thermal runaway pending event based on the temperature or the rate of temperature change of the one or more battery cells; and
performing, by the computing device, one or more actions based on the thermal runaway pending event.
